# EUROPEAN PATENT APPLICATION

(11) **EP 3 298 898 A1**
(43) Date of publication of application: **28.03.2018**
(21) Application number: 17192927.6
(22) Date of filing: 31.05.2012
(51) Int. Cl.: A21B 1/26, A21B 1/48, A21B 1/28, F24C 15/00

(54) **A BIDIRECTIONAL FLOW SYSTEM FOR A COOKING OVEN**

(30) Priority: 31.05.2011 US 201161491807 P
(62) Divisional of application: 12726554.4
(71) Applicant: John Bean Technologies Corporation, Chicago, IL 60602 (US)
(72) Inventor: McVeagh, Charles, Huron, OH Ohio 44839 (US); Paschoalini, Frank E., Huron, OH Ohio 44839 (US); Morey, Owen E., Huron, OH Ohio 44839 (US); Kane, Scott M., Sandusky, OH Ohio 44870 (US); Stang, Scott E., Monroeville, OH Ohio 44847 (US); Gunawardena, Ramesh M., Solon, OH Ohio 44139 (US)
(74) Representative: Awapatent AB

(57) **Abstract**

A bidirectional flow system for a cooking oven is provided. The flow system comprises: an oven chamber (26) having a first cooking zone (82; 182) in fluid communication with a second cooking zone (84; 184), the oven chamber having at least a floor, a ceiling, and a mezzanine (48, 80; 148; 180) for dividing the first and second cooking zones (82, 84; 182, 184); a gas circulation system (24) for supplying gaseous cooking medium initially to either of the first or second cooking zone; and a return assembly (32) for receiving returned gaseous cooking medium, wherein the return assembly includes a plurality of louvers (40, 42, 44, 46) movable between a first position and second position to receive returned gaseous cooking medium from the other of the first or second cooking zone. A method of cooking during a cooking cycle by changing flow direction of gaseous cooking medium in a cooking oven chamber is also provided.

## Description

### CROSS-REFERENCE TO RELATED APPLICATION

This application claims the benefit of Provisional Application No. 61/491807, filed May 31, 2011, the disclosure of which is hereby incorporated by reference herein in its entirety.

### BACKGROUND

Spiral cooking ovens generally include a cooking surface in the form of a pervious conveyor belt for conveying workpieces through a cooking chamber in a spiral or helical path. A heat source, such as heated steam, air, or mixtures thereof, is provided within the cooking chamber for cooking the workpieces. These spiral ovens generally have space efficiency in that they have a small footprint while providing a relatively long processing path.

In a previously designed spiral system a fixed inner mezzanine is used in the center of the spiral stack to essentially divide the spiral stack into two different cooking zones, for example, a first cooking zone being a higher pressure cooking zone and a second cooking zone being a lower pressure cooking zone. Heat transfer between gaseous cooking medium and workpieces primarily occurs according to one of two heat transfer mechanisms: condensation heat transfer and convection heat transfer. Condensation heat transfer is most effectively used when the surface temperature of the workpiece is below the dew point temperature of the gaseous cooking medium (such as steam or an air/steam mixture). Convection heat transfer is typically used to finish cooking when the temperature of the workpiece rises above the dew point temperature and also to develop color and brown the workpiece.

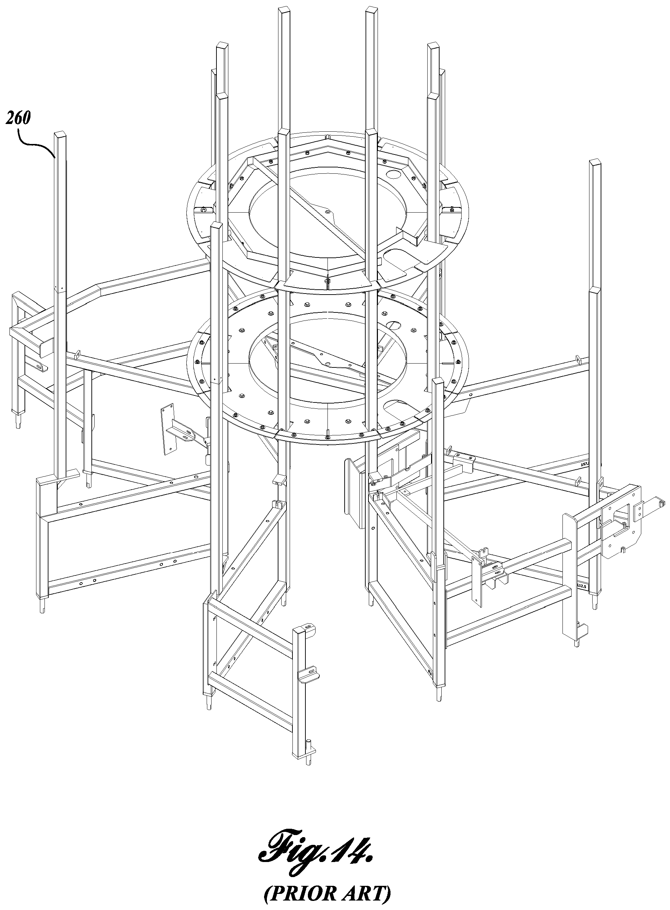

In another previously designed system, an inner mezzanine spool valve system allows for one of two mezzanine decks to be fixed at one of two different locations. In this system, the mezzanine decks are fixed at respective positions about three tiers from the bottom, so as not to interfere with the drive station for the spiral stack, and about three tiers from the top, so as not to interfere with the guidance structure for the spiral stack. (See FIGURE 14 showing a closed top valve and an open bottom valve in a frame with spiral stack omitted.)

The previously designed fixed and fixable inner mezzanines, however, do not adequately allow for system modifications to optimize the cooking zones for different products, different cooking methods, or both. Therefore, there exists a need for a system having an adjustable mezzanine to create optimized system conditions for specific types of workpieces to improve cooking results, as well as the yield of output from the system. In that regard, the system must be configured to allow for vertical movement of an inner mezzanine to a plurality of positions relative to a stationary outer mezzanine. Moreover, such an adjustable inner mezzanine can be used with a unidirectional or bidirectional circulation system for gaseous cooking medium.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, a cooking system having adjustable oven cooking zones is provided. The system generally includes a spiral stack disposed within a cooking oven chamber, the spiral stack including a plurality of tiers, and a circulation system for delivering gaseous cooking medium to the spiral stack in the cooking oven chamber. The system further includes a mezzanine assembly including an inner mezzanine and an outer mezzanine, wherein the position of the inner mezzanine is movable relative to the position of the outer mezzanine.

In accordance with another embodiment of the present disclosure, a method of adjusting cooking zones in an oven is provided. The method generally includes positioning an inner mezzanine in a first position in a spiral stack, the spiral stack including a plurality of tiers, and moving the inner mezzanine substantially vertically relative to an outer mezzanine.

In accordance with another embodiment of the present disclosure, a bidirectional flow system for a cooking oven is provided. The flow system generally includes an oven chamber having a first cooking zone in fluid communication with a second cooking zone, and a gas circulation system for supplying gaseous cooking medium initially to either of the first or second cooking zone. The flow system further includes a return assembly for receiving returned gaseous cooking medium, wherein the return assembly includes a plurality of louvers that are adjustable to receive returned gaseous cooking medium from the other of the first or second cooking zone.

In accordance with another embodiment of the present disclosure, a method of changing flow direction of gaseous cooking medium in a cooking oven is provided. The method generally includes supplying gaseous cooking medium initially to either a first cooking zone or a second cooking zone. The method further includes receiving returned gaseous cooking medium, wherein the return assembly includes a plurality of louvers that are adjustable to receive returned gaseous cooking medium from the other of the first or second cooking zone.

A cooking system having adjustable oven cooking zones is provided. The system comprising:
(a) a spiral stack disposed within a cooking oven chamber, the spiral stack including a plurality of tiers;
(b) a circulation system for delivering gaseous cooking medium to the spiral stack in the cooking oven chamber; and
(c) a mezzanine assembly including an inner mezzanine and an outer mezzanine, wherein the position of the inner mezzanine is movable relative to the position of the outer mezzanine.

The flow of the gaseous cooking medium may be a substantially vertical flow through the spiral stack.

The position of the inner mezzanine may be vertically moveable upward or downward relative to the outer mezzanine.

The mezzanine assembly may divide the spiral stack into first and second cooking zones.

The first and second cooking zones may be selected from the group consisting of high pressure and low pressure cooking zones.

The first and second cooking zones may be selected from the group consisting of condensation and convection cooking zones.

The circulation system may be unidirectional.

The circulation system may be bidirectional.

The position of the inner mezzanine may be changed with a change in circulation direction.

The position of the inner mezzanine may remain constant with a change in circulation direction.

The spiral stack may include a conveyor belt having inner and outer links. The inner links and outer links may include apertures for improving cross flow across the plurality of tiers.

Each aperture in each inner link may be greater than about 10% of the total surface area of each inner link.

The spiral stack may include a self-stacking conveyor belt.

The spiral stack may include a conveyor belt including a plurality of superimposed tiers defining a pervious annulus.

A method of adjusting cooking zones in an oven is provided. The method comprising:
(a) positioning an inner mezzanine in a first position in a spiral stack, the spiral stack including a plurality of tiers; and
(b) moving the inner mezzanine substantially vertically relative to an outer mezzanine.

The method of adjusting cooking zones in an oven may further comprise directing gaseous cooking medium into the spiral stack in a substantially vertical flow path in either or a first or a second direction.

A portion of the gaseous cooking medium may flow in a substantially horizontal cross flow pattern across one or more of the plurality of tiers.

The method of adjusting cooking zones in an oven may further comprise changing the direction of the flow path into the spiral stack in a substantially vertical flow path to the other of the first or second direction.

The method of adjusting cooking zones in an oven may further comprise moving the inner mezzanine from a first position to a second position with a change in direction of the flow path into the spiral stack.

A bidirectional flow system for a cooking oven is provided. The flow system comprising:
(a) an oven chamber having a first cooking zone in fluid communication with a second cooking zone;
(b) a gas circulation system for supplying gaseous cooking medium initially to either of the first or second cooking zone; and
(c) a return assembly for receiving returned gaseous cooking medium, wherein the return assembly includes a plurality of louvers that are adjustable to receive returned gaseous cooking medium from the other of the first or second cooking zone.

The plurality of louvers may be attached to a substantially upright structure.

The substantially upright structure may include bearing supports for each of the plurality of louvers.

The plurality of louvers may be linked to adjacent louvers by linkages.

The gaseous cooking medium may be supplied by using positive pressure.

The gaseous cooking medium may be returned by using vacuum pressure.

A method of changing flow direction of gaseous cooking medium in a cooking oven is provided. The method comprising:
(a) supplying gaseous cooking medium initially to either a first cooking zone or a second cooking zone; and
(b) receiving returned gaseous cooking medium, wherein the return assembly includes a plurality of louvers that are adjustable to receive returned gaseous cooking medium from the other of the first or second cooking zone.

The plurality of louvers may be attached to a substantially upright structure.

The substantially upright structure may include bearing supports for each of the plurality of louvers.

The plurality of louvers may be linked to adjacent louvers by linkages.

The gaseous cooking medium may be supplied by using positive pressure.

The gaseous cooking medium may be returned by using vacuum pressure.

The method of changing flow direction of gaseous cooking medium in a cooking oven may further comprise positioning the plurality of louvers in a first configuration to receive returned gaseous cooking medium from the first cooking zone.

The method of changing flow direction of gaseous cooking medium in a cooking oven may further comprise positioning the plurality of louvers in a second configuration to receive returned gaseous cooking medium from the second cooking zone.

### DESCRIPTION OF THE DRAWINGS

The foregoing aspects and many of the attendant advantages of this disclosure will become more readily appreciated by reference to the following detailed description, when taken in conjunction with the accompanying drawings, wherein:
FIGURE 1 is a cross-sectional view of an oven cooking system including a spiral conveyor or stack in an oven chamber and a gaseous medium circulation system for the oven chamber, in accordance with one embodiment of the present disclosure;
FIGURES 2 and 3 are cross-sectional views of the system of FIGURE 1, further showing down flow and up flow patterns for gaseous cooking medium within the system;
FIGURE 4 is an isometric view of the gaseous medium circulation system of FIGURES 1-3, which includes a valve arrangement for receiving and diverting gaseous cooking medium to and from the spiral stack;
FIGURE 5 is a close-up isometric view of a portion of the conveyor belt of FIGURE 1;
FIGURES 6A, 7A, and 8A are simplified cross-sectional views of the spiral stack of FIGURE 1 showing various gas flow patterns for various mezzanine positions using unidirectional down gas flow;
FIGURES 6B, 7B, and 8B are corresponding computational fluid dynamics (CFD) plots for respective FIGURES 6A, 7A, and 8A;
FIGURES 9-12 are simplified cross-sectional views of the spiral stack of FIGURE 1 showing various gas flow patterns for different mezzanine positions using bidirectional gas flow;
FIGURES 13A and 13B are perspective views of the spiral stack of FIGURE 1 including an inner mezzanine shown in first and second positions; and
FIGURE 14 is an isometric view of a frame and a mezzanine valve system, as used in the previously designed oven cooking system of FIGURE 13.

### DETAILED DESCRIPTION

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein.

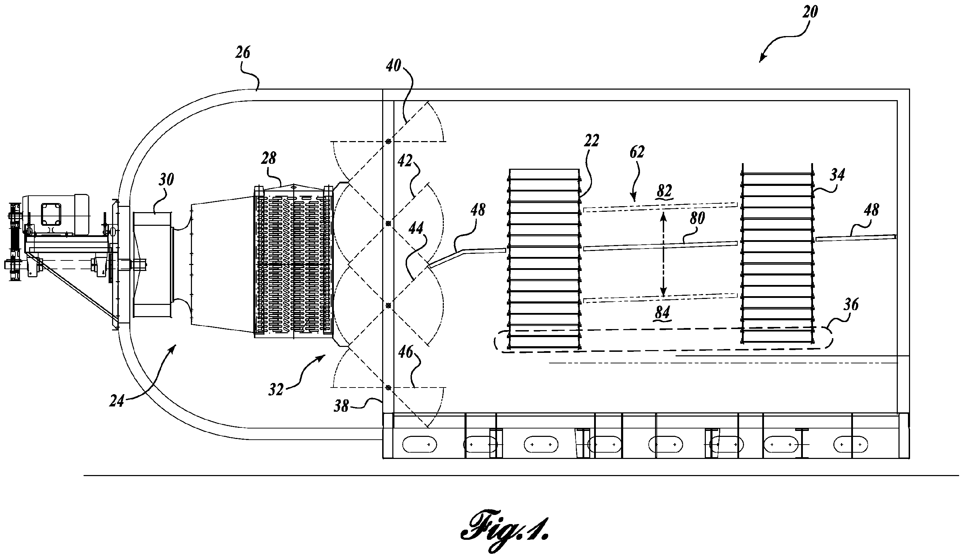

Embodiments of the present disclosure are directed to systems and methods for achieving adjustable flow of gaseous cooking medium in oven cooking zones. In the illustrated embodiment of FIGURE 1, the oven system 20 includes a spiral conveyor or stack 22 and a gaseous cooking medium circulation system 24, which delivers cooking medium to food products or workpieces disposed on the spiral stack 22. The spiral stack 22 is contained within an oven chamber 26, and the circulation system 24 circulates cooking medium within the oven chamber 26. A conveyor belt 34 supports and transports workpieces through the spiral stack 22. A mezzanine assembly (including inner and outer mezzanines 80 and 48), as described in greater detail below, divides the spiral stack 22 and the oven chamber 26 into first and second cooking zones.

A suitable gaseous cooking medium in accordance with embodiments of the present disclosure may be an air and vapor mixture at a predefined operating temperature and velocity. Therefore, the terms "gaseous cooking medium", "cooking medium", "gas", "air", and "air/steam mixtures" or "100% saturated steam" may be used interchangeably throughout the present disclosure. However, it should be appreciated that other suitable gaseous cooking mediums besides air, steam, and air/steam mixtures are also within the scope of the disclosure.

Systems and methods described herein can be used to optimize the configuration of oven cooking zones. In that regard, specific cooking zone configurations may be suitable for different workpieces and for different cooking methods. These specific optimized configurations can be achieved by adjusting flow direction, temperature, humidity, velocity, and vector direction and magnitude inside the cooking zones. Suitable cooking methods for use with the systems described herein may include, but are not limited to, 100% saturated steam cooking, high temperature cooking, high moisture cooking, and roasting cooking. Optimization of the cooking zones not only improves output product yield and profitability for the system, but also improves the quality of the output product.

Although shown and described in combination, it should be appreciated that a system 20 in accordance with embodiments of the present disclosure need not include both a spiral stack 22 and a gaseous cooking medium circulation system 24, as described herein. In that regard, either of the spiral stack 22 and the circulation system 24 may be combined with other respective flow systems and belt assemblies. As non-limiting examples, the spiral stack 22 may be combined with a different type of circulation system, whether unidirectional or bidirectional, and the circulation system 24 may be combined with a non-spiral conveyor system, such as a linear belt conveyor system.

### GAS CIRCULATION SYSTEM

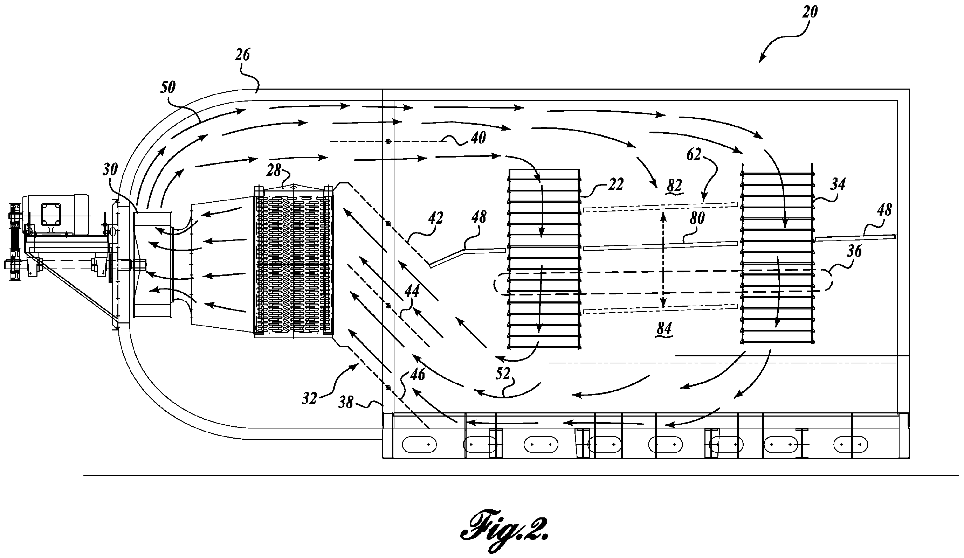

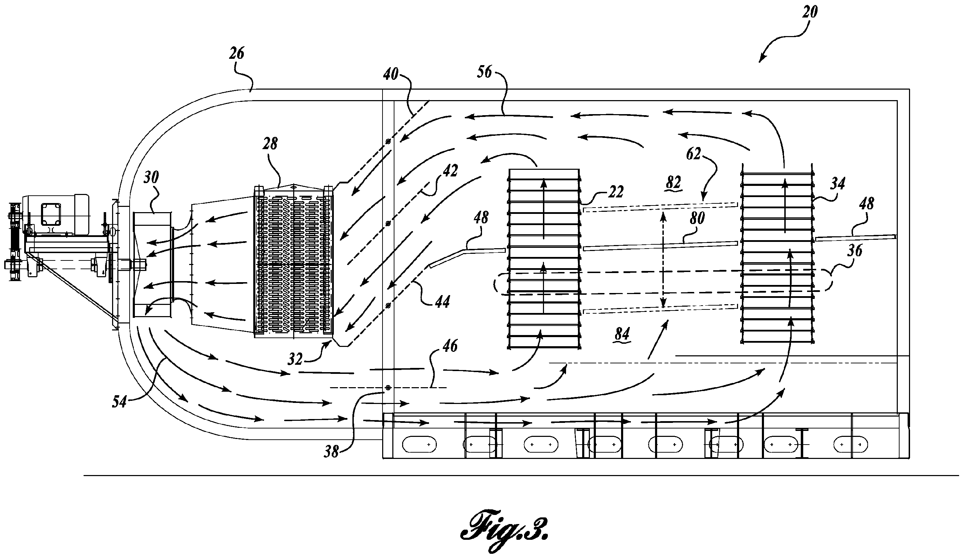

Referring to FIGURES 1-4, the circulation system 24 includes a heat exchanger 28, a fan 30, and a return assembly 32 for circulating gaseous cooking medium through the spiral stack 22 within the oven chamber 26. The circulation system 24 is configured to direct air to become predominantly vertical flow through the spiral stack 22, whether unidirectional or bidirectional (see FIGURES 2 and 3 for illustrations of up flow and down flow delivery of gaseous cooking medium). The resultant flow paths and conditions within the oven chamber 26, and more specifically, within the spiral stack 22, are based on the heat exchanger 28 and fan 30 output, the configuration of the walls of the oven chamber 26, and the gaseous cooking medium return assembly 32.

In the illustrated embodiment, the return assembly 32 includes a louvered system to control the flow of the return gas. In that regard, the return assembly includes a plurality of louvers 40, 42, 44, and 46 that are positionable in a plurality of positions relative to the direction of the output of the fan 30 to direct flow through the oven chamber 26 (compare FIGURES 2 and 3). As seen in the illustrated embodiment of FIGURE 1, the return assembly 32 includes four louvers 40, 42, 44, and 46. However, it should be appreciated that the return assembly 32 may include any number of louvers required for efficient operation of the assembly 32. As a non-limiting example, the louvered system may include a plurality of butterfly valves.

Referring to FIGURE 2, gaseous cooking medium exits fan 30 in a substantially upward direction, as shown by arrows 50. In the illustrated embodiment, the delivery gas 50 is guided to the spiral stack 22 by the contoured walls of the oven chamber 26. Such contoured walls reduce turbulence in the flow of the delivery gas 50. However, it should be appreciated that other wall designs are also within the scope of the present disclosure, whether to induce or reduce gas flow turbulence.

The delivery gas 50 is directed into a substantially vertical flow pattern as it enters the top of the spiral stack 22. After exiting the spiral stack 22, the return gas 52 is drawn by the suction of the fan 30 at the return assembly 32 and is guided by the louvers into the return assembly 32, which recirculates the return gas 52 such that the cooking process may operate in a continuous manner. The first upper louver 40 is positioned in a substantially horizontal position, so as not to interfere with gas flow to the spiral stack 22. The remaining three lower louvers 42, 44, and 46 are all angled downwardly away from the heat exchanger 28 to be in a proper position to receive return gas 52. In that regard, the distal end of the second upper louver 42 mates with the outer perimeter of an outer mezzanine 48 to essentially divide the oven chamber 26 into upper and lower zones and prevent the mixing of return gas 52 from the spiral stack 22 with delivery gas 50 entering the spiral stack 22. The distal end of the lower louver 46 mates with the floor of the oven chamber 26.

In the illustrated embodiment of FIGURES 1-3, a substantially upright structure 38 is used to support each of the louvers 40, 42, 44, and 46. In that regard, the structure 38 may, for example, be a shaft having bearing supports in four places spaced along an approximate vertical array. The orientation of the louvers 40, 42, 44, 46 is preferably switched with the movement of a single switch.

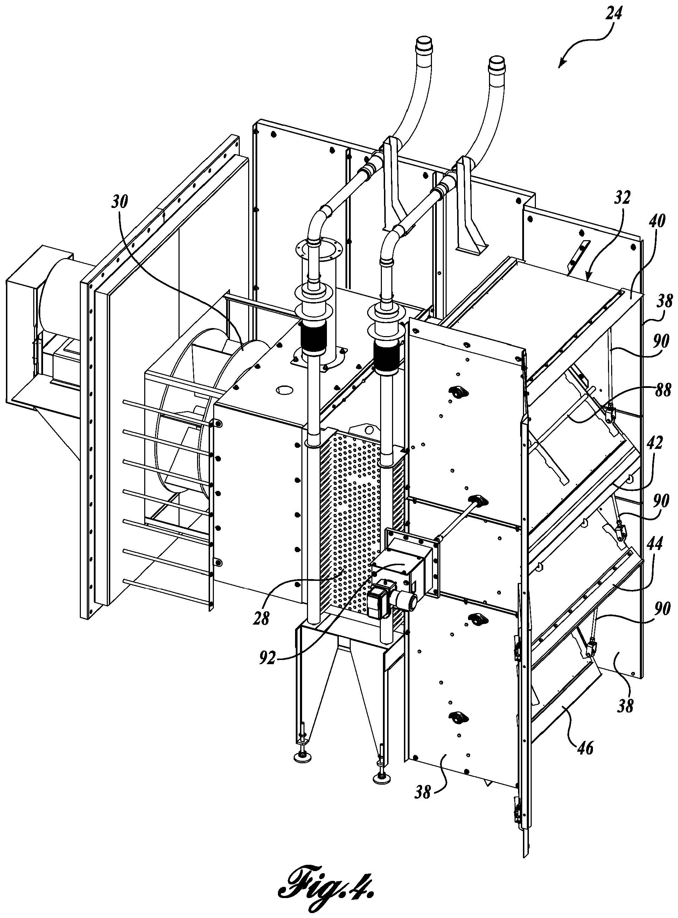

Referring now to FIGURE 4, in an alternate configuration, the substantially upright structure 38 is a wall to which each of the louvers 40, 42, 44, and 46 are pivotally coupled to the all by pivot arms 88 (only visible on louver 42). In the illustrated embodiment of FIGURE 4, the louvers 40, 42, 44, and 46 are linked with adjacent louvers by linkages 90. An actuator 92 causes louver 42 to pivot about its pivot arm 88, which, because of the linkages 90, causes the other louvers 40, 44, and 46 to pivot about their respective pivot arms (not shown).

Referring now to FIGURE 3, the gas flow has been switched (compare FIGURE 2). The switching of gas flow may be achieved by using a single fan having a selected direction of rotation and changing the flow path using the return assembly 32 to draw gas flow in the form of a substantially upward flow path (see FIGURE 2) or a substantially downward flow path (see FIGURE 3). The switching of gas flow may also be achieved using two or more fans, or by changing the direction of a single fan. For example, selectively powering one of two fans having opposite flow directions, or using a valve or damper system for changing the flow direction of a single fan without requiring powering the various fans up or down.

As seen in FIGURE 3, the gaseous cooking medium exits fan 30 in a substantially downward direction, as shown by arrows 54. The delivery gas 54 is directed into a substantially upward flow pattern as it enters the bottom of the spiral stack 22. After exiting the spiral stack 22, the return gas 56 is drawn into the return assembly 32 and is guided by the louvers into the return assembly 32. The lower louver 46 is now positioned in a substantially horizontal position, so as not to interfere with gas flow to the spiral stack 22. The remaining three upper louvers 40, 42, and 44 are all angled upwardly away from the heat exchanger 28 to be in a proper position to receive return gas 56. In that regard, the distal end of the second lower louver 44 mates with the outer perimeter of the outer mezzanine 48 to essentially divide the oven chamber 26 into upper and lower zones and prevent the mixing of return gas 56 from the spiral stack 22 with delivery gas 54 entering the spiral stack 22. The distal end of the upper louver 40 mates with the ceiling of the oven chamber 26.

Therefore, the louvers generally operate as flow receivers, but also operate as flow diverters, for example, when mating with the outer mezzanine 48, or with the floor or ceiling of the oven chamber 26. For example, louver 46 acts as a flow receiver in the configuration shown in FIGURE 3, and as a flow diverter in the configuration shown in FIGURE 2. The inventors have found by using the return assembly 32 described herein, relative to existing cooking systems, return gas to the heat exchanger is more evenly distributed; the heat exchanger and fan system have become more compact, thereby taking up less space in the oven chamber; and the supply gas from the heat exchanger and fan system is better directed toward the spiral stack. Various arrangements for the positioning of the return assembly 32 and the positioning of the inner mezzanine 80 to achieve various cooking results is described in greater detail below.

### CONVEYOR BELT AND ACHIEVING CROSS FLOW

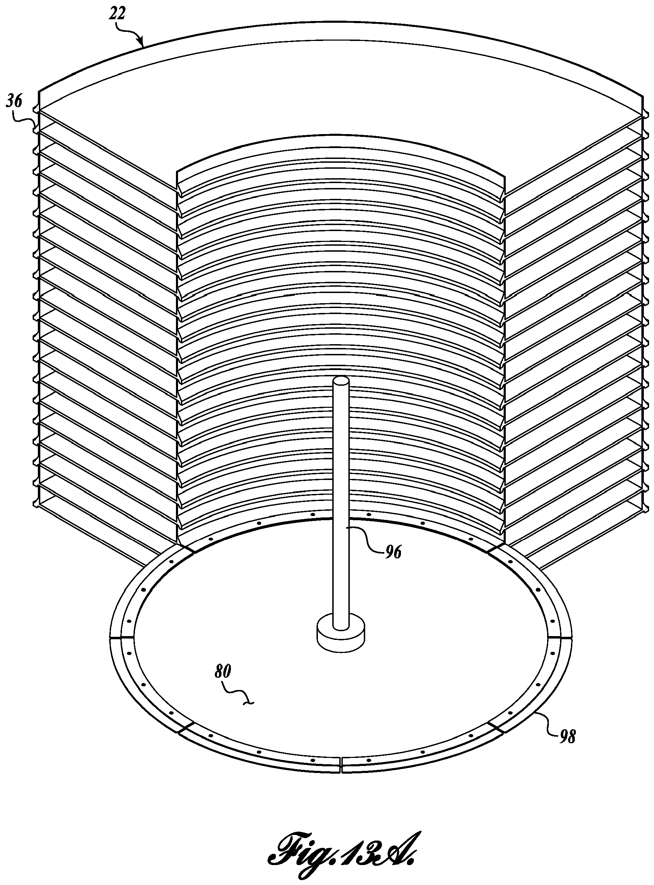

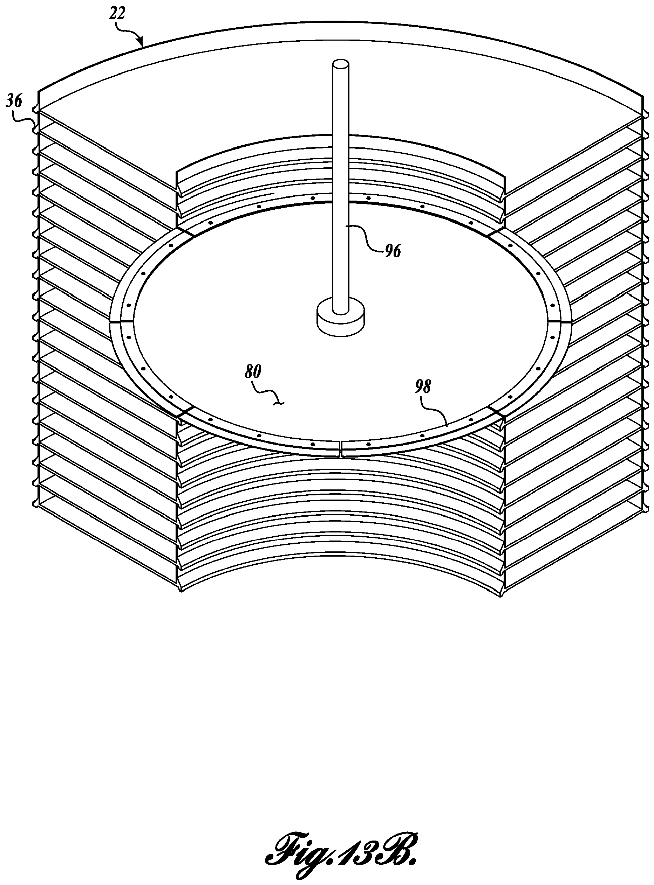

The conveyor belt 34 may move in both spiral and linear patterns in the cooking system 20. For example, the conveyor belt 34 may move in a spiral or helical pattern in the spiral stack 22 (see FIGURE 1 and FIGURES 13A and 13B) and in a linear pattern at the inlet and exit points of the spiral stack 22 (not shown). A frame (not shown in FIGURE 2, but similar to frame 260 shown in FIGURE 14) may be used to guide the conveyor belt 34 into the formation of a spiral stack 22 and provide support for the spiral stack 22.

Suitable embodiments of spiral stacking belts are shown and described in U.S. Patent No. 3,938,651, issued to Alfred et al., and U.S. Patent No. 5,803,232, issued to Frodeberg, the disclosures of which are hereby expressly incorporated by reference. However, it should be appreciated that other suitable spiral belt assemblies are also within the scope of the present disclosure.

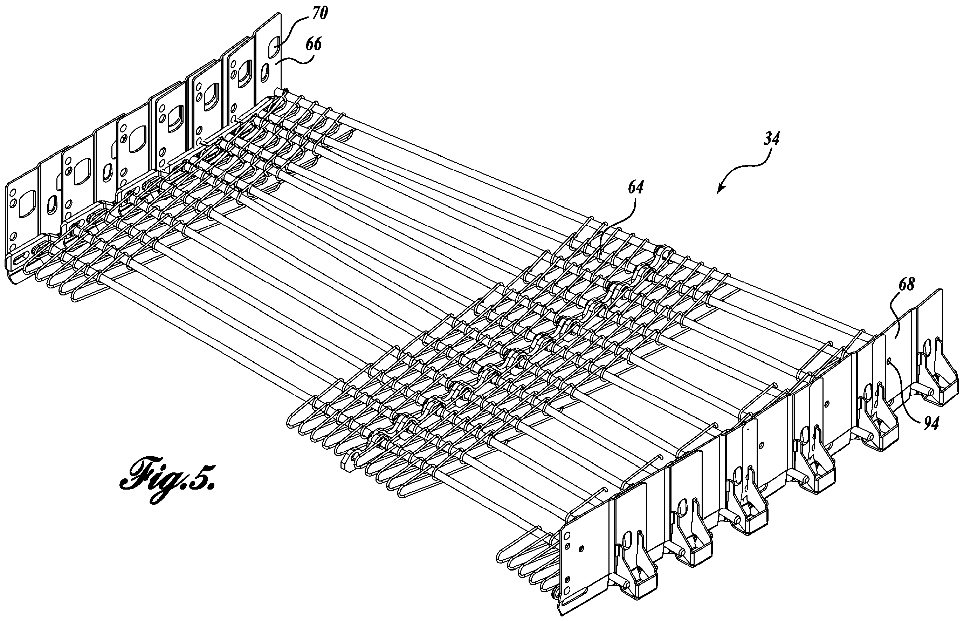

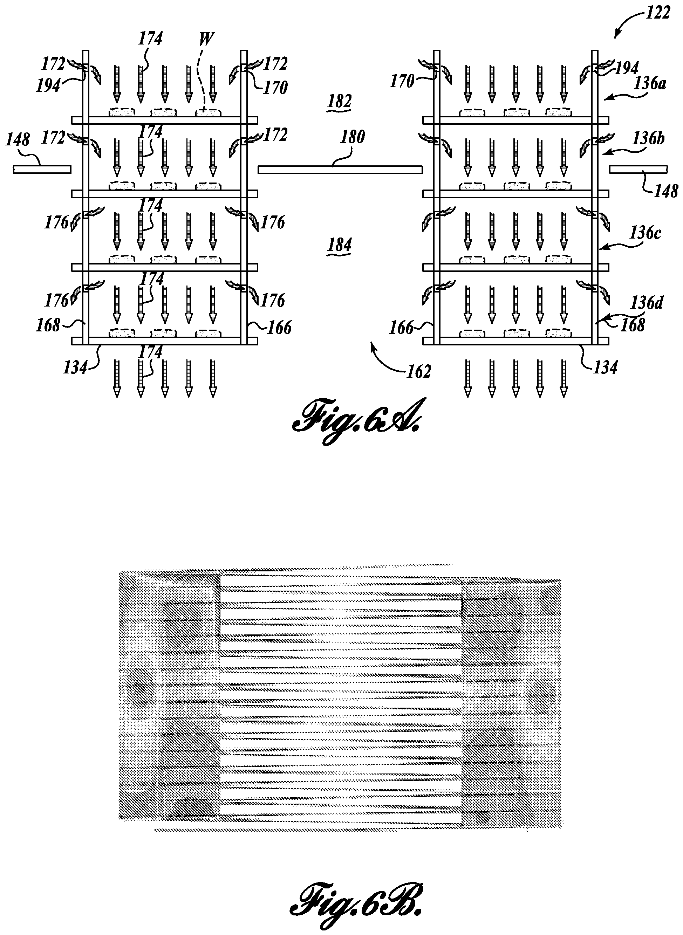

Referring to FIGURE 1, when formed as a spiral stack 22, the pervious conveyor belt 34 (see close-up perspective view in FIGURE 5) is configured into a plurality of superimposed tiers 36 that are stacked on top of each other (i.e., known in the art as "self-stacking" conveyor belt). In that regard, each tier 36 of the stack 22 forms a pervious annulus, though which gaseous cooking medium may travel. When formed in a spiral stack 22, the plurality of tiers 36 creates an inner cylindrical channel 62, through which the heated gaseous medium may also travel. Workpieces W (see, e.g., FIGURE 6A) travel on the conveyor belt 34 and are heated by gaseous cooking medium in the oven chamber 26. Exemplary spiral stacks 22 may have any number of tiers 36, typically in the range of about 8 to about 25 tiers.

Referring to FIGURE 5, the conveyor belt 34, in the form of a pervious belt mesh 64 for conveying workpieces, is formed by transverse rods interconnected by intermediate links, as well as inner and outer links 66 and 68 at the ends of the transverse rods. The inner and outer links 66 and 68 are configured to enable spiral stacking for the belt tiers 36. When the conveyor belt 34 is configured as a spiral stack 22, heated gaseous cooking medium may travel in a substantially vertical direction through the pervious belt mesh 64 of each superimposed tier 36.

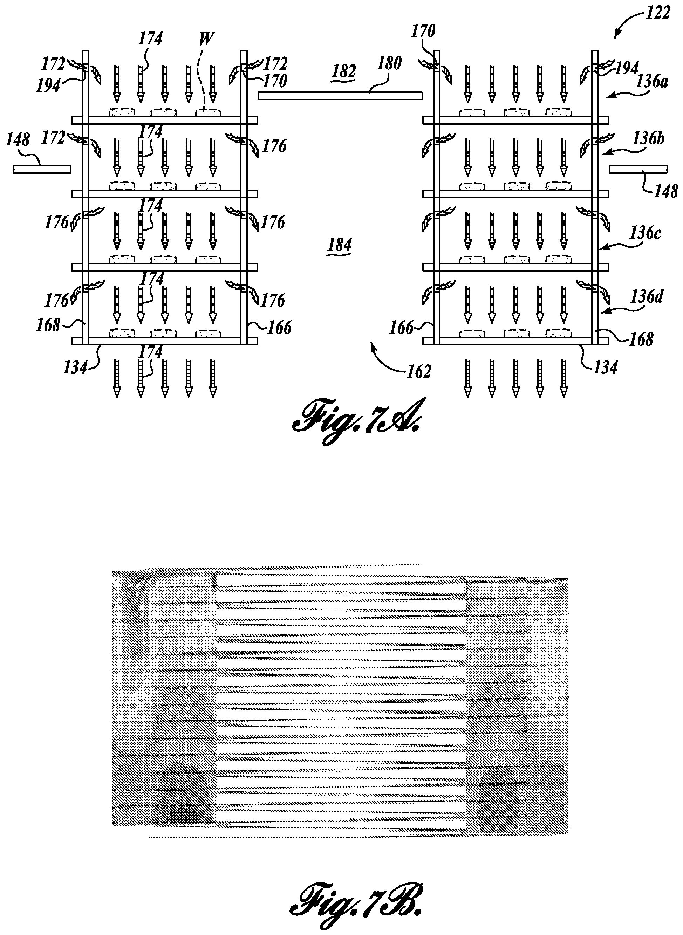

While the gaseous cooking medium primarily flows in a substantially vertical flow path through the spiral stack 22, as described above, a portion of the gaseous cooking medium may also flow in a substantially horizontal radial path (also called the "cross-flow" path) across the width of at least some of the tiers 36. The cross-flow path is channeled through the inner and outer links 66 and 68 of the superimposed tiers 36. (See cross flow, depicted by arrows 172 and 176 in FIGURES 6A, 7A, and 8A; substantially vertical down flow is depicted by arrows 174.) When the cross flow component is flowing inwardly into the low pressure region, the differential pressure prevalent at lower elevations of the stack 22 (in a down flow situation) will tend to improve the condensation flow pattern through the applicable tiers 36 (see, e.g., FIGURE 7A).

As the conveyor belt 34 transitions from a linear path to a spiral or helical path upon entering the spiral stack 22, the annular flow area through the inner links 66, toward the inner channel 62 (see FIGURES 1 and 5) of the spiral stack 22, becomes constricted because the spacing between links 66 is collapsed as the belt 34 moves into a spiral or helical path. This inherent constriction is corrected using apertures 70 in the inner links 66 to define open areas for cross flow. As the spacing between the inner links 66 becomes constricted when the belt 34 moves in a spiral or helical path, through holes 94 in the outer links 68 are revealed. Therefore, the apertures 70 and holes 94 in the respective inner and outer links 66 and 68 are designed to improve the balance flow and heat transfer uniformity between the inner and outer links 66 and 68, and, likewise, across the radial width of each tier or annulus 36 of the spiral stack 22.

In one suitable embodiment, each inner link 66 includes an aperture 70 that is greater than about 10% of the total surface area of the inner link 66. In another embodiment, the inner link 66 includes an aperture 70 that is greater than about 20% of the total surface area of the inner link 66. In another embodiment, the inner link 66 includes an aperture 70 that is in the range of about 10% to about 50% of the total surface area of the inner link 66. In another embodiment, the inner link 66 includes an aperture 70 that is in the range of about 20% to about 50% of the total surface area of the inner link 66.

In one embodiment, the apertures 70 are substantially rectilinear in design because the inventors found that they were able to increase the area of the apertures 70 on the inner links 66 by using rectilinear apertures, as compared with, for example, circular apertures of diameters equal to the width of the rectilinear apertures.

Improved flow uniformity across the width of the conveyor belt 34 within the spiral stack 22 results in more even heat treatment to the workpieces, to lower the standard deviation of temperatures within cooked products at the discharge of the oven, resulting in both improved product output yield and quality. To illustrate the concept of standard deviation, assume that the targeted regulatory minimum cooking temperature for a specific workpiece is 160°F. A processor will generally apply a safety margin to the target temperature to ensure that all workpieces exiting the system are fully cooked, with no under-cooked items exiting the system. A standard safety margin in the industry is three standard deviations, which is the temperature deviation between workpieces across the belt width. Standard deviations also depend on the workpiece type and the preferred operating conditions for the system. If each standard deviation is, for example, 5°F, then the processor will generally operate the system at 175°F (i.e., 160°F+3*5°F=175°F). If the system design can be improved to reduce the standard deviation from 5°F to, for example, 3°F, the process can operate the system at 169°F (i.e., 160°F+3*3°F=169°F), a reduction of 6°F in the final workpiece temperature.

A reduction is the final workpiece temperature has several benefits. First, the dwell time of a workpiece in the system to arrive at the specified temperature can be reduced, resulting in an increase in product yield. Second, there is a reduction in "overcooking" of some of the workpieces exiting the system in order to ensure that all workpieces reach the final temperature specification. Third, there is less variation in the cooking results for similar workpieces placed in different locations along the belt width.

### MEZZANINE ASSEMBLY

As mentioned above, the mezzanine assembly includes an inner mezzanine 80 and an outer mezzanine 48, as can be seen in FIGURE 1. The mezzanine assembly is used to divide the spiral stack 22 into a plurality of cooking zones, for example, a first cooking zone 82 and a second cooking zone 84. The inner mezzanine 80 is movable, and as described in greater detail below, the inner mezzanine 80 positioning relative to the outer mezzanine 48 can be used to define the cooking zones and/or define zones of high velocity flow for the cooking medium by augmenting cross flow in certain tiers 36 of the spiral stack 22. In that regard, the inner mezzanine 80 can be used to define the directionality of velocity and pressure for the cross flow component across superimposed tiers 36 in the spiral stack 22.

As can be seen in the illustrated embodiment of FIGURE 1, the outer mezzanine 48 is fixed and divides the spiral stack 22 into first and second cooking zones 82 and 84. It should be appreciated that the outer mezzanine 48 can be used to cause a pressure differential and/or create different cooking environments in the spiral stack 22 above and below the outer mezzanine 48. In that regard, the outer mezzanine 48 creates a fixed barrier between cooking zones 82 and 84. In the illustrated embodiment of FIGURE 2, with the gaseous cooking medium in a down flow pattern, the first cooking zone 82 is a high pressure cooking zone, and the second cooking zone 84 is a low pressure cooking zone. For the reverse up flow pattern, shown in FIGURE 3, the first cooking zone 82 is a low pressure cooking zone, and the second cooking zone 84 is a high pressure cooking zone.

Because convection cooking relies on the velocity of the cooking medium, the zones of high velocity flow for the cooking medium near the inner mezzanine may be desirable in a convection process. In contrast, a condensation cooking process derives less benefit from high velocity flow of the cooking medium; instead, condensation cooking processes are optimized by a differential between the temperature of the workpiece and the dew point temperature of the cooking medium. Therefore, zones of the spiral stack 22 with higher flow velocities may be more suitable for a convection cooking process, and zones of the spiral stack 22 with lower flow velocities may be more suitable for a condensation cooking process. As a non-limiting example, the high pressure cooking zone may be a convection heat transfer zone and the low pressure cooking zone may be a condensation heat transfer zone.

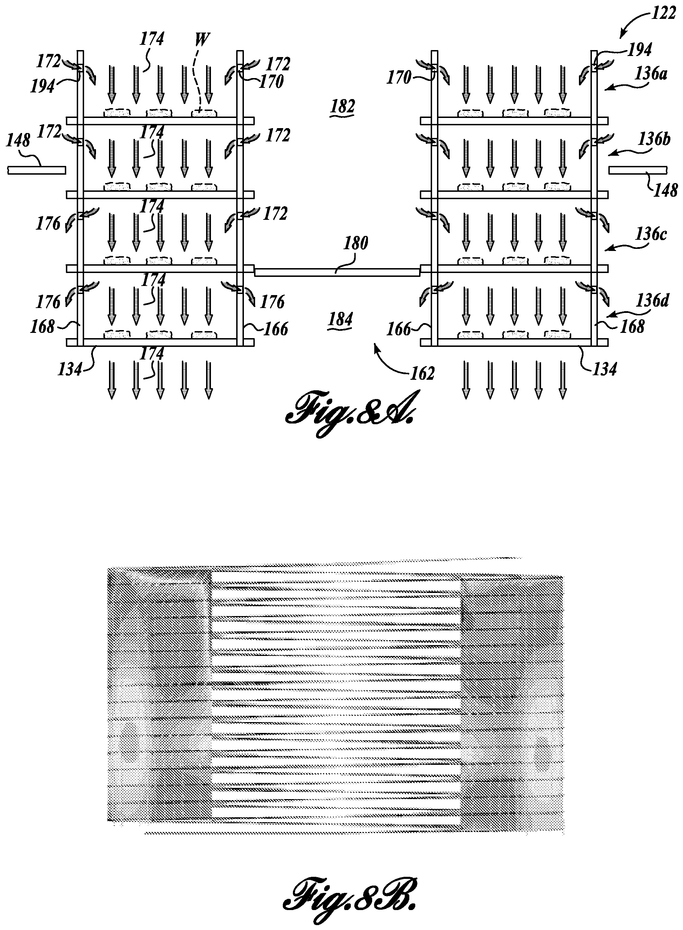

The inner mezzanine 80 is movable relative to the fixed outer mezzanine 48. In that regard, the inner mezzanine 80 is capable of movement in a substantially vertical direction into a plurality of positions relative to the tiers 36 of the spiral stack 22. In the series of FIGURES 6A, 7A, and 8A, the inner mezzanine 80 is shown in various intermediate, high, and low positions. Because of the pressure drop in annular flow though the stack 22, the positioning of the inner mezzanine 80 determines the directionality of the velocity and pressure for the cross flow component across one or more tiers 36 of the stack 22. For example, referring to FIGURE 7A, based on the positioning of the inner mezzanine 80 above the outer mezzanine 48 in a down flow scenario, an inward cross flow component flows across tier 136b. In contrast, referring now to FIGURE 8A, based on the positioning of the inner mezzanine 80 below the outer mezzanine 48 in a down flow scenario, an outward cross flow component flows across tier 136c.

The inner mezzanine 80 can be moved using any suitable method of movement. For example, the inner mezzanine 80 may be attached to an actuator system including a shaft or cable 96 to support vertical movement (see, for example, FIGURES 13A and 13B). In FIGURE 13A, the inner mezzanine 80 is shown in a low position relative to the position of the outer mezzanine (see FIGURE 1), and in FIGURE 13B the inner mezzanine 80 is shown in a high position relative to the position of the outer mezzanine (see FIGURE 1).

Still referring to FIGURES 13A and 13B, the inner mezzanine 80 may include an outer skirt or seal 98, such as a flexible plastic skirt to provide an interface between the tiers 36 of the spiral stack 22 and the inner mezzanine 80 and to prevent flow and loss of the pressure differential between zones around the outer circumference of the inner mezzanine 80. A suitable skirt may be made from polytetrafluoroethylene (e.g., Teflon®) or any other suitable plastic or flexible material that is able to withstand cooking temperatures. The inner mezzanine 80 may be made from stainless steel or another suitable material that is easy to clean and resists corrosion.

The inner mezzanine 80 can be suitably located at various vertical positions in the channel 62. For example, the inner mezzanine 80 may be located about three tiers from the bottom and about three tiers from the top and at any location within that range. Depending on the number of tiers being used in the spiral stack 22, this range of movement produces a large number of finite settings to fine tune a process for both product quality and economics.

Different cooking processes are used to achieve different cooking results, and oftentimes workpieces must be exposed to more than one cooking processes to achieve desirable cooking results. In that regard, studies have shown that a condensation cooking zone process that uses humid gaseous cooking medium to cook food is the most efficient heat transfer process to the surface of the workpieces. In a condensation cooking zone process, when the surface temperature of the workpiece is below the dew point temperature of the gaseous cooking medium (such as steam), the gaseous cooking medium condenses, causing latent heat transfer with the gas to liquid phase change.

Conditions for condensation cooking for any given application depend on the substrate (i.e., the food product or workpiece), as well as the desired operating conditions for the system. When the temperature of the workpiece rises during the condensation cooking process, the condensation cooking process becomes less efficient, and eventually stops when the surface temperature of the workpiece reaches the dew point temperature of the surrounding environment. At this point, workpieces on the conveyor can be transferred to the next step in the process where food items enter a convection or forced convection heating zone process.

In a forced convection heating process, the temperature of the gaseous cooking medium and the flow velocity of the cooking medium are the control variables. As discussed above, the condensation cooking zone is generally used to heat and cook food products or workpieces that are at a temperature that is below the dew point temperature of the gaseous cooking medium (for example, entering the condensation cooking zone in a cold or frozen state). Convection heating is then generally used to finish the cooking when the surface temperature of the workpieces rises above the dew point temperature and also to brown the workpieces.

The operating factors affecting each cooking zone include, but are not limited to, the following: humidity, temperature, gas flow velocity, and gas flow vector magnitude and directionality in the cooking zone, and consequently, changing densities and pressure drops causing complicated flow patterns that may have to be discerned and analyzed through the use of computer fluid dynamics (CFD) models in combination with heat transfer and fluid flow theory. The manipulation of such operating factors specific to each workpiece may deliver improved product yields, throughput, as well as more uniform desired work piece attributes such as color, mouth feel, flavor profile, texture and overall product appeal.

The movable inner mezzanine 80 of the present disclosure allows for a continuous cooking process without requiring a process pause for mezzanine deck adjustment. As described above, a previous mezzanine design includes a spool valve system that allows for fixing an inner mezzanine deck at one of two inner channel locations to divide the helical stack into first and second cooking zones (see FIGURE 14). When opening one spool valve and closing the other, heated gaseous medium escapes from the first and second cooking zones. However, with the movable inner mezzanine of the present disclosure, the seal is maintained between cooking zones while the inner mezzanine 80 is in motion.

When the system 20 is in use, the combination of the circulation system 24, the apertures 70 and 94 in the respective inner and outer links 66 and 68 of the conveyor belt 34, and the movable inner mezzanine 80, results in various flow patterns to optimize oven cooking zones for specific food products and processing requirements. The operation of the system 20 and the effects of each of the various components to create optimized oven cooking zones will now be described in greater detail with reference to the following EXAMPLES and FIGURES 6A-12. The systems shown and described in the examples that follow have similar part numbers as the system 20 described above with reference to FIGURES 1-5, but in the 100 series.

In EXAMPLES 1-5, a simplified spiral stack 122 having four tiers 136a, 136b, 136c, and 136d is shown. EXAMPLES 1-3 are generally directed to systems using unidirectional flow of the gaseous cooking medium. EXAMPLES 4 and 5 are generally directed to systems using bidirectional (or reversible) flow of the gaseous cooking medium. EXAMPLES 6-8 are directed to process conditions for various food products, such as a breaded food product, an uncoated food product, and a bakery food product.

### EXAMPLE 1: UNIDIRECTIONAL FLOW WITH CENTERED INNER MEZZANINE

Referring to FIGURES 6A and 6B, the flow of gaseous cooking medium in the spiral stack 122 is unidirectional in a substantially vertical, downward direction (see arrows 50 in system 20 of FIGURE 2). The inner mezzanine 180 is positioned at a centered position in the spiral stack 122, and the outer mezzanine 148 is substantially planar with the inner mezzanine 180, which creates a high pressure cooking zone 182 and a low pressure cooking zone 184, each having substantially similar cycle time duration as a result of the centered position of the inner mezzanine 180.

Flow of the gaseous cooking medium is directed into the top tier 136a of stack 122, creating a high pressure cooking zone 182 in the cylindrical channel 162 above the inner mezzanine 180 and in the top tiers 136a and 136b of the stack 122. The flow through the stack 122 in the high pressure zone 182 above the inner mezzanine 180 and the outer mezzanine 148 is achieved in two ways. First, substantially horizontal cross flow (represented by arrows 172) travels into the spiral stack 122, e.g., from the channel 162 through the apertures 170 of inner links 166 into tiers 136a and 136b, and from the oven chamber surrounding the spiral stack 122 through holes 194 in the outer links 168 into tiers 136a and 136b. Second, substantially vertical flow (represented by arrows 174), as delivered from the circulation system 24 (see FIGURE 2), travels through the mesh of the conveyor belt 134 into each high pressure tier 136a and 136b.

The low pressure cooking zone 184 is located below the inner mezzanine 180. In the low pressure cooking zone 184, the flow through the stack 122 is also achieved in two ways. First, substantially horizontal cross flow (represented by arrows 176) travels out of the spiral stack 122, e.g., from tiers 136c and 136d through the apertures 170 of inner links 166 into the center channel 162 and the oven chamber surrounding the spiral stack 122. Second, substantially vertical flow (represented by arrows 174), continues to travel through the mesh of the conveyor belt 134 into each low pressure tier 136c and 136d.

FIGURE 6B shows a CFD plot for the configurations shown in FIGURE 6A. The system configuration shown in FIGURES 6A and 6B may be used in cooking processes wherein substantially similar cycle time durations are desired in the high pressure cooking zone 182 and the low pressure cooking zone 184.

### EXAMPLE 2: UNIDIRECTIONAL FLOW WITH HIGH INNER MEZZANINE

Referring to FIGURES 7A and 7B, the flow of gaseous cooking medium in the spiral stack 122 is unidirectional in a substantially vertical, downward direction (see arrows 50 in system 20 of FIGURE 2). The inner mezzanine 180 is positioned at a high position in the spiral stack 122, and the outer mezzanine 148, in its fixed centered position, is lower than the inner mezzanine 180.

The flow through the stack 122 in the high pressure zone 182 above the inner mezzanine 180 is achieved in two ways. First, substantially horizontal cross flow (represented by arrows 172) travels into the spiral stack 122, e.g., from the channel 162 through the apertures 170 of inner links 166 into tier 136a, and from the oven chamber surrounding the spiral stack 122 through holes 194 in the outer links 168 into tier 136a. Second, substantially vertical flow (represented by arrows 174) travels through the mesh of the conveyor belt 134 into the high pressure tier 136a.

A transition zone from high pressure to low pressure is created in tier 136b. In that regard, tier 136b is located above the outer mezzanine 148, but below the inner mezzanine 180. Therefore, the cross flow component travels from the high pressure cooking zone 182 to the low pressure cooking zone 184, which means traveling radially inwardly across tier 136b. In that regard, flow 172 travels from the oven chamber surrounding the helical stack 122 through holes 194 in the outer links 168 into tiers 136b, then exits through apertures 170 of inner links 166 into channel 162. Substantially vertical flow (represented by arrows 174) travels through the mesh of the conveyor belt 134 into the tier 136b.

The low pressure cooking zone 184 is located below the inner mezzanine 180. In the low pressure cooking zone 184, the flow through the stack 122 is also achieved in two ways. First, substantially horizontal cross flow (represented by arrows 176) travels out of the spiral stack 122, e.g., from tiers 136c and 136d through the apertures 170 of inner links 166 into the center channel 162 and the oven chamber surrounding the spiral stack 122. Second, substantially vertical flow (represented by arrows 174), continues to travel through the mesh of the conveyor belt 134 into tiers 136c and 136d.

FIGURE 7B shows a CFD plot for the configurations shown in FIGURE 7A. The system configuration shown in FIGURES 7A and 7B may be used in cooking processes wherein a longer cycle time duration in the low pressure cooking zone 184 (for example, a condensation cooking zone) is desired. For example, for cool or cold uncooked workpieces (such as uncooked chicken pieces) that are entering the system, a longer condensation cooking process will allow for a more efficient cooking process for this particular workpiece.

To allow for a longer condensation cooking process for a particular workpiece, the inner mezzanine 180 is located at a higher position in conjunction with down flow, which allows a high humidity condition for the three lower tiers 136b, 136c, and 136d. Because condensation cooking is less velocity dependent than convention cooking, a gaseous cooking medium (such as an air/vapor mixture) will distribute more evenly with the cross flow component on the three lower tiers 136b, 136c, and 136d. When the temperature of the workpiece exceeds the dew point temperature of the gaseous cooking medium, it will be ready for browning in the zone of high flow velocity formed around tier 136b. Compare with cross flow in the opposite direction in the zone of high flow velocity formed around tier 136c in the illustrated embodiment of FIGURES 8A and 8B, described in greater detail below in EXAMPLE 3.

### EXAMPLE 3: UNIDIRECTIONAL FLOW WITH LOW INNER MEZZANINE

Referring to FIGURES 8A and 8B, the flow of gaseous cooking medium in the spiral stack 122 is unidirectional in a substantially vertical, downward direction (see arrows 50 in system 20 of FIGURE 2). The inner mezzanine 180 is positioned at a low position in the spiral stack 122, and the outer mezzanine 148, in its fixed centered position, is higher than the inner mezzanine 180.

The flow through the stack 122 above the inner mezzanine 180 is achieved in two ways. First, substantially horizontal cross flow (represented by arrows 172) travels into the spiral stack 122, e.g., from the channel 162 through the apertures 170 of inner links 166 into tiers 136a and 136b, and from the oven chamber surrounding the spiral stack 122 through holes 194 in the outer links 168 into tiers 136a and 136b. Second, substantially vertical flow (represented by arrows 174) travels through the mesh of the conveyor belt 134 into the high pressure tiers 136a and 136b.

A transition zone from high pressure to low pressure is created in tier 136c. In that regard, tier 136c is located below the outer mezzanine 148, but above the inner mezzanine 180. Therefore, the cross flow component travels from the high pressure cooking zone 182 to the low pressure cooking zone 184, which means traveling radially outward across tier 136c. In that regard, flow 172 travels from the channel into tier 136c, then exits from the holes 194 in the outer links 168 into the oven chamber surrounding the spiral stack 122. Substantially vertical flow (represented by arrows 174) travels through the mesh of the conveyor belt 134 into tier 136c.

The low pressure cooking zone 184 is located below the inner mezzanine 180. In the low pressure cooking zone 184, the flow through the stack 122 is also achieved in two ways. First, substantially horizontal cross flow (represented by arrows 176) travels out of the spiral stack 122, e.g., from tier 136d through the apertures 170 of inner links 166 into the center channel 162 and the oven chamber surrounding the spiral stack 122. Second, substantially vertical flow (represented by arrows 174), continues to travel through the mesh of the conveyor belt 134 into tier 136d.

FIGURE 8B shows a CFD plot for the configurations shown in FIGURE 8A. The system configuration shown in FIGURES 8A and 8B may be used in cooking processes wherein a longer cycle time duration in the high pressure cooking zone 182 (for example, a convection cooking zone) is desired. For example, for a precooked workpiece (such as a chicken piece that exits a grilling or frying system) that is entering the system, a shorter condensation cooking process will allow for a more efficient cooking process. In that regard, a workpiece in the system will travel a limited number of tiers (if any) before the temperature of the workpiece exceeds the dew point temperature of the gaseous cooking medium. When the temperature of the workpiece reaches or exceeds the dew point temperature of the gaseous cooking medium, it must be transitioned to the zone of high flow velocity around tier 136c to achieve additional cooking results, such as browning. In this example, the zone of high flow velocity is low in the spiral stack 22, boosting convection early in the cooking process.

### EXAMPLE 4: BIDIRECTIONAL FLOW WITH SWITCHING INNER MEZZANINE

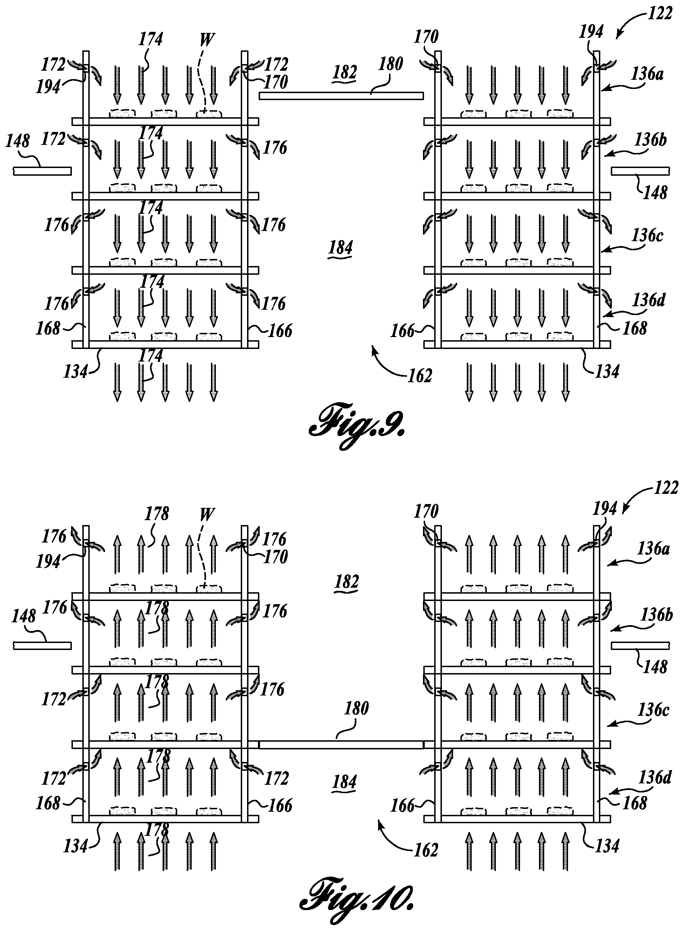

Referring now to FIGURES 9 and 10, the system configuration shown in FIGURE 7A and described above in EXAMPLE 2 is provided, except with bidirectional flow of the gaseous cooking medium and movement of the inner mezzanine 180. In that regard, when the flow direction of the gaseous cooking medium changes direction from down flow 174 (FIGURE 9) to up flow 178 (FIGURE 10), the inner mezzanine 180 correspondingly moves from a high position to a low position.

The result is a change in direction of airflow and a change in the positioning of the high and low pressure cooking zones, but the general cycle time durations of the workpieces in the high and low pressure cooking zones remain the same. For example, in FIGURE 9, the upper zone 182 is a high pressure cooking zone and the lower zone 184 is a low pressure cooking zone, as gaseous cooking medium 174 flows in the downward direction. In contrast, in FIGURE 10, when the gaseous cooking medium 178 is switched to flow in the upward direction, the lower zone 184 becomes the high pressure cooking zone and the upper zone 182 becomes the low pressure cooking zone.

During switching between up flow and down flow, the heating modes within the upper and lower zones 182 and 184 within the spiral stack 122 may transition, for example, between condensation and convection heating modes. Such switching provides for more even browning of the workpieces. In that regard, to achieve uniform browning on both sides of the workpieces, a change in direction of the gaseous cooking medium is usually required.

The flow reversal may also result in workpiece surface cooling, effectively extending the duration of the workpieces in the condensation zone. In that regard, the switching between up flow and down flow may create two zones: a cooling zone and a condensation cooking zone. The extent of such workpiece surface cooling will depend on the operating conditions and the number of switching cycles being employed. This cooling phenomena may improve the overall efficiency of the cooking process due to the extension of the condensation cooking zone through the annulus 36 of the spiral stack 22.

Because the inner mezzanine 180 switches with a change in direction of gas flow, the number of tiers in the high and low pressure cooking zones remains constant, even though the location of the high and low pressure cooking zones changes. It should be appreciated that although the inner mezzanine is shown in the system configuration of FIGURE 7A and described above in EXAMPLE 2, such switching may be used with any system configuration.

### EXAMPLE 5: BIDIRECTIONAL FLOW WITH CONSTANT INNER MEZZANINE

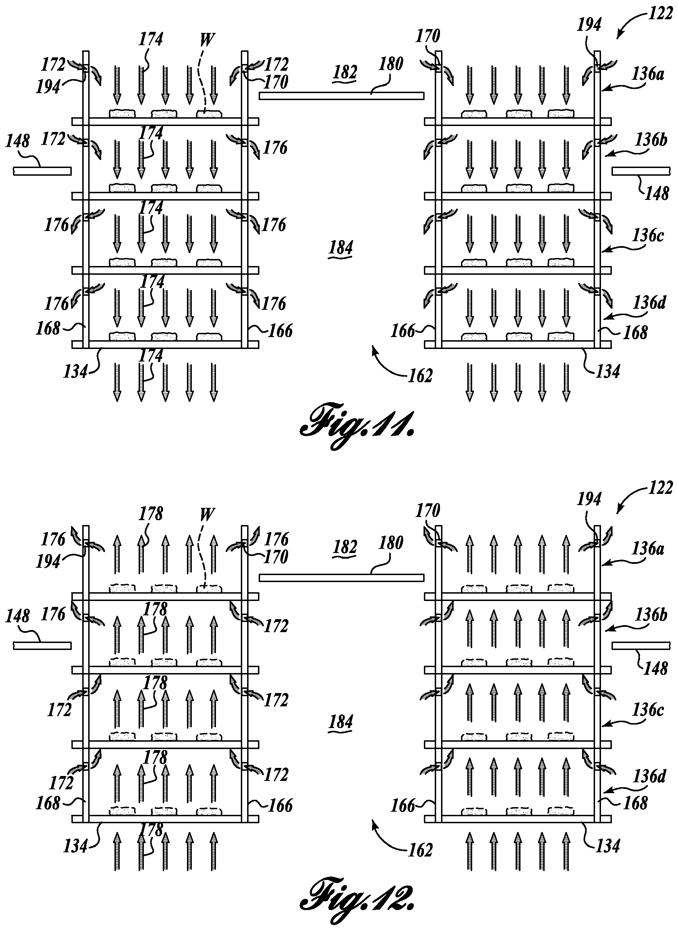

Referring now to FIGURES 11 and 12, the system configuration shown in FIGURE 7A and described above in EXAMPLE 2 is provided with bidirectional flow of the gaseous cooking medium and no movement of the inner mezzanine 180. In that regard, when the flow direction of the gaseous cooking medium changes direction from down flow 174 (FIGURE 9) to up flow 178 (FIGURE 10), the inner mezzanine 180 stays in position, which in this example is a high position.

The result of such switching is a change in direction of airflow and also a change in the cycle time durations of the workpieces in the high and low pressure cooking zones. For example, in FIGURE 11, the upper zone 182 is a high pressure cooking zone and the lower zone 184 is a low pressure cooking zone, as gaseous cooking medium 174 flows in the downward direction. In contrast, in FIGURE 12, when the gaseous cooking medium 178 is switched to flow in the upward direction, the lower zone 184 becomes the high pressure cooking zone and the upper zone 182 becomes the low pressure cooking zone. Such switching provides for more even cooking of the workpieces. In that regard, exposing a workpiece to a change in the number of tiers, for example, in each of the convection and condensation processes, may allow for enhanced browning results without burning the workpieces.

The flow reversal may also result in workpiece surface cooling, effectively extending the duration of the workpieces in the condensation zone. In that regard, the switching between up flow and down flow may create two zones: a cooling zone and a condensation cooking zone. The extent of such workpiece surface cooling will depend on the operating conditions and the number of switching cycles being employed. This cooling phenomena may improve the overall efficiency of the cooking process due to the extension of the condensation cooking zone.

Because the inner mezzanine 180 stays in a constant position, the number of tiers in each of the high pressure cooking zone and low pressure cooking zone switch. It should be appreciated that although the inner mezzanine is shown in the system configuration of FIGURE 7A and described above in EXAMPLE 2, such switching may be used with any system configuration.

As described above, the systems and methods in accordance with the present disclosure include unidirectional and bidirectional flows of gaseous cooking medium and an adjustable inner mezzanine that is movable into a plurality of positions, and which during use, may remain fixed at a selected location or may switch with switching flow. The location of the inner mezzanine is determined on the basis of empirical evidence for the specific workpiece, process, and desired results. Once the optimized location is established, a recipe for operational setting is determined for a given product and process application.

### EXAMPLE 6: BREADED FOOD PRODUCT

A breaded food product undergoes a pre-heating step such as a fryer to set the coating, and therefore, will have a higher product surface temperature than a raw product entering the system (compare an uncoated food product as in EXAMPLE 7). As a result of the higher product surface temperature, the product will experience less condensation during the cook step within the oven system 20. To optimize cooking results for this type of product, the inner mezzanine 80 is positioned at the lowest possible elevation (with down flow of cooking medium) because convection is the predominant mode of heat transfer to the food product. In this position, the entire cross flow region will be exposed to high pressure cooking medium flow with flow direction into the inner links.

### EXAMPLE 7: UNCOATED FOOD PRODUCT

An uncoated food product without a preheating step (as compared with a breaded food product in EXAMPLE 6) is cooked entirely within the oven system 20. The food product is first heated through condensation heat transfer, followed by convection heat transfer after the food product reaches the dew point temperature of the gaseous cooking medium. To optimize cooking results for this type of product, the inner mezzanine 80 is positioned at a higher elevation from the bottom than for a pre-cooked product (compare EXAMPLE 6). The actual position of the inner mezzanine 80 and flow direction (or parameters for periodically switching flow direction) of the gaseous cooking medium will depend on the operating parameters employed for the specific food product, and will be selected based on product type, product thickness, and the sensory attributes desired for the finished product.

### EXAMPLE 8: BAKERY FOOD PRODUCT

A bakery food product may require a specific bottom surface texture, in terms of surface dryness and color, for example, to minimize soggy bottoms and prevent a sticky product from sticking to the conveyor belt. Therefore, a dry convection heating process may be preferred during the bake within the oven system 20. To deliver the desired product bottom surface attributes, the gas flow direction through the stack may be up flow (which can help minimize soggy bottoms and prevent a sticky product from sticking to the conveyor belt). To optimize cooking results for this type of product, the inner mezzanine 80 is positioned at the highest elevation for convection heat transfer. This positioning mirrors EXAMPLE 6, in which the position of the inner mezzanine 80 is corrected for the down flow direction of cooking medium. Also similar to EXAMPLE 6, the cross flow will be exposed to high pressure cooking medium flow with flow direction into the inner links.

While illustrative embodiments have been illustrated and described, it will be appreciated that various changes can be made therein without departing from the spirit and scope of the disclosure.

## Claims

**1.** A bidirectional flow system for a cooking oven, the flow system comprising:
an oven chamber (26) having a first cooking zone (82; 182) in fluid communication with a second cooking zone (84; 184), the oven chamber having at least a floor, a ceiling, and a mezzanine (48, 80; 148; 180) for dividing the first and second cooking zones (82, 84; 182, 184);
a gas circulation system (24) for supplying gaseous cooking medium initially to either of the first or second cooking zone; and
a return assembly (32) for receiving returned gaseous cooking medium, wherein the return assembly includes a plurality of louvers (40, 42, 44, 46) movable between a first position and second position to receive returned gaseous cooking medium from the other of the first or second cooking zone.

**2.** The flow system of Claim 1, wherein the plurality of louvers includes a first louver, wherein the first louver contacts the ceiling when the plurality of louvers is positioned in the first position.

**3.** The flow system of Claim 1 or 2, wherein the plurality of louvers includes a second louver, wherein the second louver contacts the floor when the plurality of louvers is positioned in the second position.

**4.** The flow system of any one of Claims 1-3, wherein the plurality of louvers includes a third louver, wherein the third louver is an intermediate louver for return gas distribution when the plurality of louvers is positioned in the first position.

**5.** The flow system of Claim 4, wherein the third louver contacts the mezzanine when the plurality of louvers is positioned in the second position.

**6.** The flow system of any one of Claims 1-5, further comprising a fourth louver, wherein the fourth louver contacts the mezzanine when the plurality of louvers is positioned in the first position.

**7.** The flow system of Claim 6, wherein the fourth louver is an intermediate louver for return gas distribution when the plurality of louvers is positioned in the second position.

**8.** The flow system of any one of Claims 4-7, wherein the second louver is in a distributing position for the supply gas when the plurality of louvers is positioned in the first position.

**9.** The flow system of any one of Claims 2-8, wherein the first louver is in a distributing position for the supply gas when the plurality of louvers is positioned in the second position.

**10.** The flow system of any one of Claims 1-9, wherein the plurality of louvers is attached to a substantially upright structure (38).

**3.** The flow system of Claim 10, wherein the substantially upright structure includes bearing supports for each of the plurality of louvers.

**12.** The flow system of Claim 13, wherein the plurality of louvers are linked to adjacent louvers by linkages (90).

**13.** The flow system of any one of Claims 1-12, wherein gaseous cooking medium is supplied using positive pressure or returned using vacuum pressure, or both.

**14.** The flow system of Claim 1, wherein the gas circulation system includes a heat exchanger (28).

**15.** A method of cooking during a cooking cycle by changing flow direction of gaseous cooking medium in a cooking oven chamber, the method comprising:
supplying gaseous cooking medium initially to either a first cooking zone or a second cooking zone in the oven chamber having at least a floor and a ceiling; and
receiving returned gaseous cooking medium, wherein the return assembly includes a plurality of louvers movable between a first position and second position to receive returned gaseous cooking medium from the other of the first or second cooking zone.
